Europäisches Patentamt

European Patent Office

Office européen des brevets

(19)

(11) Veröffentlichungsnummer: **0 139 887**
**B1**

(12) **EUROPÄISCHE PATENTSCHRIFT**

(45) Veröffentlichungstag der Patentschrift:
**09.03.88**

(21) Anmeldenummer: **84108818.0**

(22) Anmeldetag: **25.07.84**

(51) Int. Cl.⁴: **H 01 S 3/03**

(54) **Gaslaser mit einer federgestützten Kapillare.**

(30) Priorität: **18.08.83 DE 3329872**

(43) Veröffentlichungstag der Anmeldung:
**08.05.85 Patentblatt 85/19**

(45) Bekanntmachung des Hinweises auf die Patenterteilung:
**09.03.88 Patentblatt 88/10**

(84) Benannte Vertragsstaaten:
**BE CH DE FR GB IT LI NL SE**

(56) Entgegenhaltungen:
**FR - A - 2 301 938**
**US - A - 3 988 698**
**US - A - 4 352 185**

(73) Patentinhaber: **Siemens Aktiengesellschaft Berlin und München, Wittelsbacherplatz 2, D-8000 München 2 (DE)**

(72) Erfinder: **Schmid, Rudolf, Röntgenstrasse 36, D-8012 Ottobrunn (DE)**

## Beschreibung

Die Erfindung bezieht sich auf einen Gaslaser gemäss dem Oberbegriff des Anspruchs 1 sowie auf ein Verfahren zur Herstellung eines Gaslasers gemäss Anspruch 9. Eine solche Laserröhre wird in der US-A-3 988 698 beschrieben.

Bei der bekannten Laserausführung umgibt ein zylindrischer, mit metallischen Endplatten versehener Glasmantel eine Glaskapillare und hohle Kaltkathode. Die Kapillare hat ein aufgetrichtertes Ende, an dem sie mit dem Glasmantel und der einen Endplatte verschmolzen ist; das andere Kathodenende – es ragt etwas in den Kathodenhohlraum hinein – wird durch eine aufgeschobene Stützfeder in Position gehalten. Diese Feder wird dabei durch die Kathode, die ihrerseits durch eine elastisch gestaltete Zuleitung gegen die andere Endplatte abgefedert wird, an eine umlaufende Manteleinschnürung gedrückt.

Ein solcher Laser lässt sich relativ einfach zusammenbauen und ist auch mechanisch recht robust. Bei stärkeren Erschütterungen kann es allerdings vorkommen, dass die aus ihrer Ursprungslage herausgetriebene Stützfeder nicht mehr zurückfindet, sondern in einer neuen Position verbleibt, in der sie die Kapillarenachse minimal verkippt. Dann sind aber die Spiegel nicht mehr optimal ausgerichtet, mit der Folge, dass die Laserleistung abnimmt. Solche Dejustierungen liessen sich weitgehend vermeiden, wenn man die betroffenen Teile und Flächen sehr eng toleriert; damit würde aber die Fertigung erheblich belastet.

Eine besonders stossfeste Konstruktion ergibt sich, wenn man, wie dies etwa in der US-A-3 904 986 vorgesehen ist, die Feder durch eine Glasscheibe ersetzt und diese Scheibe mit der Kapillare und der Hülle verlötet bzw. verschmilzt. Von dieser Bauweise wird aber seit Jahren kein Gebrauch mehr gemacht, weil der Aufwand zu gross ist und der Resonator durch thermische Verspannungen verstimmt werden kann.

In jüngerer Zeit wird vor allem der Gedanke diskutiert, das freie Kapillarenende in einen von der benachbarten Endplatte ausgehenden Glas- oder Metallstutzen einzuklemmen (vgl. hierzu die DE-A-3 037 153 oder US-A-4 352 185). Eine solche Lagerung verträgt auch harte Stösse und erlaubt thermische Ausdehnungsunterschiede. Nachteilig ist jedoch, dass die Kapillare nicht ohne weiteres auf ganzer Länge genutzt werden kann, zu Schwingungen und Durchbiegungen neigt und zudem in aller Regel mit dem Ballastraum über eine Seitenöffnung kommunizieren muss, die die Zündung erschwert.

Aufgabe der Erfindung ist es, einen Gaslaser anzugeben, der einfach aufgebaut ist und auch unter grossen mechanischen und thermischen Belastungen eine konstante Leistung abgibt. Diese Aufgabe wird erfindungsgemäss durch einen Laser mit den Merkmalen des Patentanspruchs 1 gelöst. (Die dabei genannten α-Werte beziehen sich auf einen Temperaturbereich zwischen 20°C und 300°C.)

Bei dem hier vorgeschlagenen Lasertyp dient die Manteleinschnürung – anders als bei der Röhre der US-A-3 988 698 – nicht als Anschlagsfläche, sondern zur Einfassung der Lochscheibe. Diese Konstruktion ist ausserordentlich stabil, da der Mantel, wie erfindungsgemäss vorgeschrieben, aufgeschrumpft ist und somit längs der gesamten Umfangsfläche ein inniger Kontakt zur Lochscheibe besteht. Versuche haben gezeigt, dass bei geeignet gewählten Prozesstemperaturen das Glas ansintert, ein Vorgang, bei dem zwar noch keine regelrechte Schmelzverbindung entsteht, aber doch schon beträchtliche Adhäsionskräfte ausgebildet werden. Die Feder ist dann so fest verankert, dass sie ohne weiteres auch noch die Kathode – allein oder zusammen mit anderen Fixierhilfen – haltern könnte.

Das Aufschrumpfen von Glas ist an sich ein altbekanntes Mittel und auch schon auf dem Gaslasergebiet angewendet worden, dort allerdings nicht zur Befestigung von Teilen, sondern zur Kalibrierung von Innendurchmessern (DE-C-1 962 201).

Wenn der Laser unter besonders rauhen Umweltbedingungen arbeiten muss, so sollte man in der Federfassung auch noch Druckspannungen erzeugen und/oder die Kontaktfläche zwischen der Feder und dem Mantel vergrössern. Hierzu empfielt es sich, für die Lochscheibe ein Material zu verwenden, das sich unter Temperaturerhöhungen weniger stark ausdehnt als das Mantelglas, bzw. die Scheibe an ihrem Aussenrand mit einem ringförmigen Steg zu versehen.

Die federnden Elemente sollten stets aus einem temperaturbeständigen Werkstoff bestehen, der auch noch nach dem Ausheizen der Röhre voll elastisch bleibt. Solche Federlegierungen, etwa bestimmte Stähle oder Co-Ni-Cr-Zusammensetzungen, sind allerdings an einige der üblichen Mantelgläser thermisch nicht angepasst. In diesen Fällen bietet es sich an, die Feder mehrteilig auszubilden und die Lochscheibe als Übergangselement zwischen dem Mantel und dem eigentlichen Federteil fungieren zu lassen.

Weitere vorteilhafte Ausgestaltungen und Weiterbildungen sind Gegenstand zusätzlicher Ansprüche.

Der Lösungsvorschlag soll nun anhand bevorzugter Ausführungsbeispiele, die in der beigefügten Zeichnung schematisch dargestellt sind, näher erläutert werden. In den Figuren sind einander entsprechende Teile mit gleichen Bezugszeichen versehen. Es zeigen:

Fig. 1 einen erfindungsgemässen Gaslaser in einem Längsschnitt;
Fig. 2 einen Ausschnitt aus der Fig. 1 und
Fig. 3 von einem zweiten Ausführungsbeispiel den gleichen Ausschnitt.

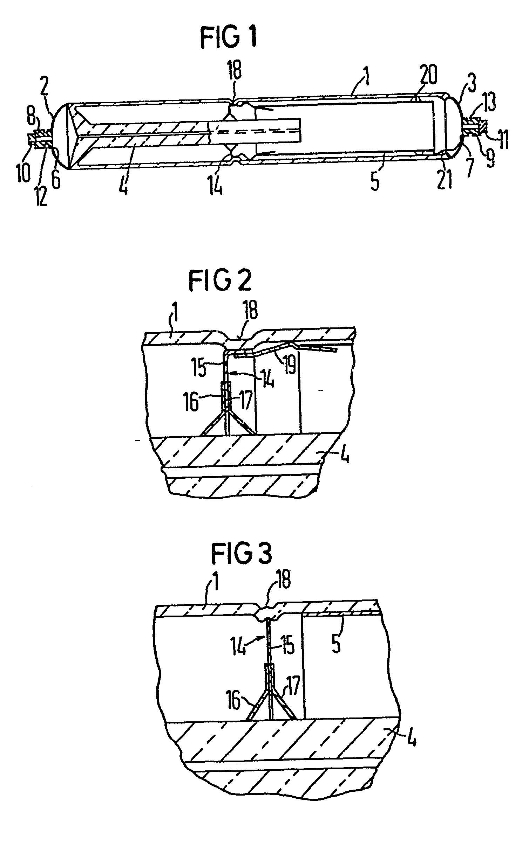

Der Gaslaser der Figuren 1 und 2 ist für Leitstrahlgeber vorgesehen, die in der Nähe stark vibrierender Maschinen aufgestellt werden müssen. Die Röhre ist koaxial aufgebaut und enthält einen zylindrischen Glasmantel 1, der beidseitig durch metallische Endkappen 2 und 3 abgeschlossen wird und eine Kapillare 4 sowie eine hohle Kaltkathode 5 umschliesst.

Jede Endplatte hat eine zentrale Öffnung 6, 7, in die von aussen ein röhrchenförmiger Spiegelträger 8, 9 gesteckt ist. Das äussere Ende jedes Trägers dient als Fassung für einen Spiegelkörper 10, 11, der auf seiner Innenseite mit einer (nicht dargestellten) teil- bzw. vollreflektierenden Spiegelschicht versehen ist. Um die beiden Reflektoren zur Kapillarenachse justieren zu können, enthält jeder Spiegelträger eine geschwächte, dauerhaft plastisch verformbare Wandzone 12, 13.

Die Kapillare läuft an ihrem einen Ende in einen Trichter aus, der mit dem Glasmantel und der Endkappe 2 verschmolzen ist. Das andere Kapillarenende wird von einer aufgesteckten Stützfeder 14 umgeben. Diese Feder enthält, wie am besten der Fig. 2 zu entnehmen, eine erste, senkrecht zur Kapillarenachse erstreckte Lochscheibe 13 sowie zwei kleinere Lochscheiben 16, 17, die der Scheibe 15 jeweils an einer Seite anliegen und mit ihr punktweise verschweisst sind. Die Scheibe 15 ist an ihrer Aussenseite mit einem ringförmigen, koaxial zum Glasmantel orientierten Steg versehen. Dieser Steg wird von einer Manteleinschnürung 18 eingefasst. Die Scheiben 16 und 17 sind jeweils mit herausgebogenen Federzungen umgeben, die die Kapillare kranzförmig umgeben und ihr klemmend anliegen.

Die Stützfeder 14 dient ausserdem noch zur Halterung der Kathode 5. Zu diesem Zweck enthält sie mehrere Finger 19, die jeweils vom Scheibensteg zur Mantelwandung ausgehen, von dort nach einem Knick in den Kathodenhohlraum laufen und dort, wo ihnen die Kathode anliegt, eingesattelt sind. Das andere Kathodenende wird durch Noppen 20 gestützt. Eine Zuleitung 21 verbindet die Kathode 5 mit der Endkappe 3. Die Endkappe 2 dient als Anode.

Das Mantelglas und die Kapillare bestehen aus einer Glassorte, die von der Firma Schott unter der Bezeichnung «8250» vertrieben wird und einen $\alpha_1$-Wert von $50 \cdot 10^{-7}$ $K^{-1}$ hat. Die grössere Lochscheibe ist eine daran thermisch angepasste Ni-Fe-Co-Legierung, d.h. mit $\alpha_2$, so dass gilt

$$\left| \frac{\alpha_2 - \alpha_1}{\alpha_1} \right| \leq 0,1 ,$$

und für die kleineren Lochscheiben wurde eine Ni-Co-Cr-Legierung gewählt. Die übrigen Röhrenteile bestehen aus Materialien, die beispielsweise in der DE-C-2 506 707 genannt sind. In dieser Patentschrift wird auch beschrieben, wie alle diese Teile vakuumdicht miteinander verbunden sind.

Der Gaslaser wird folgendermassen gefertigt:
Zunächst wird die Kapillare mit dem Mantel und dem anodenseitigen Mantelabschluss verschmolzen. Dann schiebt man Feder und Kathode ein, setzt den kathodenseitigen Mantelabschluss auf und verschmilzt ihn mit dem Mantel.

Bei diesem Fertigungsschritt sind der Mantel und der kathodenseitige Spiegelträger eingespannt. In der gleichen Einspannung wird dann die Einschnürung erzeugt, und zwar dadurch, dass man die entsprechende Mantelzone durch eine offene Flamme auf Temperaturen zwischen 900°C und 1000°C bringt und auf der Glasdrehbank gegen ein Kohlestück dreht. Die Temperatur wird so gewählt, dass das Mantelglas eine Zähigkeit zwischen $10^4$ und $10^{7,6}$ dPa.s, insbesondere zwischen $10^5$ und $10^6$ dPa.s hat. Die übrigen Herstellungsschritte gehen aus der bereits zitierten Patentschrift 2 506 707 hervor. Das Ausführungsbeispiel der Fig. 3 unterscheidet sich von dem der Figuren 1 und 2 im wesentlichen nur darin, dass bei der Stützfeder der Steg und die Finger fehlen. Das bedeutet, dass die Kontaktfläche zwischen Mantel und Lochscheibe sehr viel schmaler ist. Der Scheibensitz wird dadurch aber nicht lockerer, weil das eingezogene Mantelglas, wie in der Figur angedeutet, die Scheibe zu beiden Seiten umfasst. Die Kathode besteht im vorliegenden Fall aus einem gerollten Blech, das sich durch eigene Federkräfte an den Glasmantel presst und deshalb keine zusätzlichen Befestigungsmittel benötigt.

**Patentansprüche**

1. Gaslaser mit folgenden Merkmalen:
1) eine gasgefüllte Hülle enthält einen langgestreckten, vorzugsweise zylindrischen Glasmantel, der aus einem Material mit einem thermischen Ausdehnungskoeffizienten $\alpha_1$ besteht;
2) der Mantel umgibt eine Kapillare, die an ihrem einen Ende fest mit dem Mantel verbunden ist und an ihrem anderen Ende durch eine aufgeschobene Stützfeder gehaltert wird;
3) die Stützfeder hat eine senkrecht zur Kapillarenachse erstreckte Lochscheibe, die an einer umlaufenden Manteleinschnürung anliegt; dadurch gekennzeichnet, dass
4) die Lochscheibe (15) aus einem Material mit einem thermischen Ausdehnungskoeffizienten $\alpha_2$ besteht, wobei gilt

$$\left| \frac{\alpha_2 - \alpha_1}{\alpha_1} \right| \leq 0,1 , \text{ und dass}$$

5) die Manteleinschnürung (18) eine Schrumpffassung für die Lochscheibe (15) bildet.

2. Laser nach Anspruch 1, dadurch gekennzeichnet, dass gilt

$$\left| \frac{\alpha_2 - \alpha_1}{\alpha_1} \right| \leq 0,04, \text{ insb. } 0,02.$$

3. Laser nach den Ansprüchen 1 oder 2, dadurch gekennzeichnet, dass gilt $\alpha_2 < \alpha_1$.

4. Laser nach einem der Ansprüche 1 bis 3, dadurch gekennzeichnet, dass die Manteleinschnürung (18) einen ringförmigen Steg der Lochscheibe (15) umfasst.

5. Laser nach einem der Ansprüche 1 bis 4, dadurch gekennzeichnet, dass mit der Lochscheibe (15) mindestens eine weitere, parallel zu ihr erstreckte Lochscheibe (16, 17) verbunden ist, die kleinere Aussenabmessungen hat und aus einem Material mit einer temperaturbeständigen Elastizität besteht.

6. Laser nach einem der Ansprüche 1 bis 5, dadurch gekennzeichnet, dass von der Lochscheibe (15) elastische Finger (19) ausgehen, an denen die Kathode anschlägt.

7. Laser nach Anspruch 6, dadurch gekennzeichnet, dass die Finger (19) Winkelstücke sind, mit einem ersten Schenkel, der von der Lochplatte (15) zur Mantelwandung in den von der Kathode (5) umschlossenen Raum weist und dort, wo die Kathode anschlägt, eingesattelt ist.

8. Laser nach einem der Ansprüche 1 bis 7, dadurch gekennzeichnet, dass das Mantelglas ein Hartglas mit einem $\alpha_1$-Wert von etwa $50 \cdot 10^{-7}$ K$^{-1}$ ist und dass die Lochscheibe (15) aus einer Ni-Fe-Co-Legierung und ggf. die weitere Lochscheibe (16, 17) aus einer Co-Ni-Cr-Legierung besteht.

9. Verfahren zur Herstellung eines Lasers gemäss einem der Ansprüche 1 bis 8, dadurch gekennzeichnet, dass der Glasmantel (1) am Ort der Lochplatte (15) auf Temperaturen erhitzt wird, bei denen das Mantelglas eine Zähigkeit zwischen $10^4$ und $10^{7,6}$ dPa.s, insbesondere zwischen $10^5$ dPa.s und $10^6$ dPa.s, hat, und dort eingedrückt wird.

**Claims**

1. A gas laser with the following features:
1) a gas filled casing contains an elongated, preferably cylindrical glass jacket which consists of a material having a thermal coefficient of expansion $\alpha_1$;
2) the jacket encloses a capillary which has one end rigidly connected to the jacket and its other end supported by a pushed-on thrust spring:
3) the thrust spring has a perforated disc extending normal to the capillary axis and bearing against an encircling constriction in the jacket; characterised in that,
4) the perforated disc (15) consists of a material having a thermal coefficient of expansion $\alpha_2$, where

$$\left| \frac{\alpha_2 - \alpha_1}{\alpha_1} \right| \leqq 0.1, \text{ and in that}$$

5) the jacket constriction (18) forms a shrunk fitting for the perforated disc (15).

2. A laser according to Claim 1, characterised in that

$$\left| \frac{\alpha_2 - \alpha_1}{\alpha_1} \right| \leqq 0.04, \text{ in particular } 0.02.$$

3. A laser according to Claim 1 or 2, characterised in that $\alpha_2 < \alpha_1$.

4. A laser according to one of Claims 1 to 3, characterised in that the jacket constriction (18) engages around an annular web on the perforated disc (15).

5. A laser according to one of Claims 1 to 4, characterised in that the perforated disc (15) is connected to at least one further perforated disc (16, 17) of smaller overall size which extends parallel with the former and consists of a material having a temperature-stable elasticity.

6. A laser according to one of Claims 1 to 5, characterised in that elastic fingers (19) emerge from the perforated disc (15) to but against the cathode.

7. A laser according to Claim 6, characterised in that the fingers (19) are angled members having a first arm extending from the perforated plate (15) to the jacket wall, and a second arm which points from the jacket wall into the space enclosed by the cathode (5), and being firmly seated where it abuts the cathode.

8. A laser according to one of Claims 1 to 7, characterised in that the jacket glass is a hard glass having a $\alpha_1$ value of about $50.10^{-7}$ K$^{-1}$ and in that the perforated disc (15) consists of a Ni-Fe-Co alloy and possibly in that the further perforated disc (16, 17) consists of a Co-Ni-Cr alloy.

9. A method of manufacturing a laser according to one of Claims 1 to 8, characterised in that the glass jacket (1) at the location of the perforated plate (15) is heated to temperatures at which the jacket glass has a toughness of between $19^4$ and $10^{7 \cdot 6}$ dPa.s, and is in particular $10^5$ and $10^6$ dPa.s, in which location it is impressed.

**Revendications**

1. Laser à gaz ayant les caractéristiques suivantes:
1) une enceinte emplie de gaz contient une enveloppe oblongue, de préférence cylindrique, en verre, qui est en une matière ayant un coefficient de dilatation thermique $\alpha_1$;
2) l'enveloppe entoure un tube capillaire dont l'une des extrémités est reliée rigidement à l'enveloppe et dont l'autre extrémité est maintenue par un ressort d'appui qui y est monté:
3) le ressort d'appui a un disque perforé qui s'étend perpendiculairement à l'axe du tube capillaire et qui s'applique sur une gorge faisant tout le tour de l'enveloppe; caractérisé en ce que
4) le disque perforé (15) est en un matériau ayant un coefficient de dilatation thermique $\alpha_2$, avec

$$\left| \frac{\alpha_2 - \alpha_1}{\alpha_1} \right| \leqq 0,1, \text{ et en ce que}$$

5) la gorge (18) de l'enveloppe forme un sertissage avec rétreint pour le disque perforé (15).

2. Laser suivant la revendication 1, caractérisé en ce que

$$\left| \frac{\alpha_2 - \alpha_1}{\alpha_1} \right| \leqq 0,04, \text{ et notamment à } 0,02.$$

3. Laser suivant la revendication 1 ou 2, caractérisé en ce que $\alpha_2 < \alpha_1$.

4. Laser suivant l'une des revendications 1 à 3, caractérisé en ce que la gorge (18) de l'enveloppe comporte une collerette annulaire du disque perforé (15).

5. Laser suivant l'une des revendications 1 à 4, caractérisé en ce qu'au disque perforé (15) est relié au moins un autre disque perforé (16, 17) qui lui est parallèle, qui a des dimensions extérieures plus petites et qui est en un matériau ayant une certaine élasticité résistant à la température.

6. Laser suivant l'une des revendications 1 à 5, caractérisé en ce que du disque perforé (15) partent des doigts élastiques (19) sur lesquels la cathode vient buter.

7. Laser suivant la revendication 6, caractérisé en ce que les doigts (19) sont des pièces coudées ayant une première branche qui s'étend du disque perforé (15) à la paroi de l'enveloppe, et une seconde branche qui va de la paroi de l'enveloppe à la chambre entourée par la cathode (5) et qui s'incurve à l'endroit de butée de la cathode.

8. Laser suivant l'une des revendications 1 à 7, caractérisé en ce que le verre de l'enveloppe est un verre dur ayant une valeur $\alpha_1$ de $50.10^{-7}$ $K^{-1}$ et en ce que le disque perforé (15) est en un alliage de Ni-Fe-Co et, le cas échéant, l'autre disque perforé (16, 17) est en un alliage de Co-Ni-Cr.

9. Procédé de fabrication d'un laser suivant l'une des revendications 1 à 8, caractérisé en ce qu'il consiste à porter l'enveloppe en verre (1) à l'endroit du disque perforé (15) à des températures pour lesquelles le verre de l'enveloppe à une viscosité comprise entre $10^4$ et $10^{7,6}$ dPa.s, notamment comprise entre $10^5$ et $10^6$ dPa.s et à l'enfoncer à cet endroit.

FIG 1

FIG 2

FIG 3